# EUROPÄISCHE PATENTSCHRIFT

(11) **EP 3 189 566 B1**
(45) Veröffentlichungstag und Bekanntmachung des Hinweises auf die Patenterteilung: **25.03.2020**
(21) Anmeldenummer: 15753941.2
(22) Anmeldetag: 20.08.2015
(51) Int. Cl.: H01T 1/14, H01C 7/12, H02H 9/04, H01T 1/20, H01T 4/04

(54) **ANORDNUNG ZUR SICHEREN NETZTRENNUNG VON ÜBERSPANNUNGSABLEITERN, INSBESONDERE VARISTOREN, BEI VORLIEGEN VON TEMPORÄREN ÜBERSPANNUNGEN**
ARRANGEMENT FOR SECURE SYSTEM ISOLATION OF SURGE ARRESTERS, PARTICULARLY VARISTORS, IN THE PRESENCE OF TEMPORARY OVERVOLTAGES
ENSEMBLE DE DÉCONNEXION DE RÉSEAU FIABLE DE DISPOSITIFS DE PROTECTION CONTRE DES SURTENSIONS, EN PARTICULIER DE VARISTANCES, EN PRÉSENCE DE SURTENSIONS TEMPORAIRES

(30) Priorität: 05.09.2014 DE 202014007250 U; 13.10.2014 DE 202014104854 U
(43) Veröffentlichungstag der Anmeldung: 12.07.2017
(73) Patentinhaber: DEHN SE + Co KG, 92318 Neumarkt / Opf. (DE)
(72) Erfinder: HIERL, Stephan, 92318 Neumarkt (DE); STRANGFELD, Uwe, 90478 Nürnberg (DE)
(74) Vertreter: Kruspig, Volkmar
(86) Internationale Anmeldenummer: PCT/EP2015/069148
(87) Internationale Veröffentlichungsnummer: WO 2016/034426

(56) Entgegenhaltungen:
- EP-B1- 2 188 876
- DE-A1- 2 229 301
- DE-A1- 3 318 588
- DE-C1- 19 545 505
- DE-U1- 7 719 678
- US-A1- 2009 046 406

## Beschreibung

Die Erfindung betrifft eine Anordnung zur sicheren Netztrennung von Überspannungsableitern, insbesondere Varistoren, bei Vorliegen von temporären Überspannungen (TOV) durch Auslösen einer mit dem Überspannungsableiter in Reihe liegenden Sicherung gemäß Anspruch 1.

Überspannungsableiter, auch zum Einsatz in Telekommunikations- und Datenverarbeitungsnetzen gehören zum Stand der Technik. Bei diversen Fehlerzuständen in einem Stromversorgungsnetz, z.B. bei schnellen Ansteigen der Betriebsspannung über die Nennspannung, bei Fehlinstallationen oder dem Anliegen verketteter Spannungen werden Varistoren als wesentliche Bestandteile von Überspannungsschutzgeräten überlastet. Beispiele für bekannte Überspannungsableiter finden sich in DE 77 19 678 U1, US 2009/046406 A1 und DE 22 29 301 A1.

Bekannte thermische Abtrennvorrichtungen, die beim Überschreiten einer Belastungsgrenze, z.B. durch Aufschmelzen eines Lotes eine Netztrennung herbeiführen, sind in vielen Fällen zu träge, um ein irreversibles Zerstören des Varistors, insbesondere ein Abbrennen desselben zu vermeiden.

Auch im Fall einer unerwünschten Durchlegierung eines Varistors bleibt ein erheblicher Restwiderstand bestehen, so dass ein Auslösen in Reihe geschalteter Sicherungen erschwert wird aufgrund der Tatsache, dass der Strom zum Schmelzen des Sicherungsleiters nicht ausreichend ist.

Bei verschiedenen Untersuchungen hat sich gezeigt, dass bei einer IT-Netz-TOV-Belastung von 1200V + Uc mit Ip = 300A für 200ms strombegrenzende Bauteile, insbesondere Varistoren bei Triggerschaltungen in Überspannungsableitern abbrennen.

Aufgrund des hohen Widerstands der eingesetzten Bauteile wird der dabei fließende Strom nicht groß genug, um die vorhandenen, auch auf einem Verdrahtungsträger integrierten Sicherungen auszulösen.
Bewegte Teile wie z.B. ebenfalls bekannte Kurzschlussbügel über einem Gasableiter zum Zweck des Erreichens eines Fail-Safe-Verhaltens reagieren oft zu träge.

Obiges hat zur Folge, dass die betreffenden Überspannungsschutzgeräte entweder anfangen zu brennen oder derart stark intern verrußen, dass beim Umschalten nach der TOV-Belastung, d.h. dem Vorliegen einer transienten Überspannung, auf die Bemessungsspannung eine Brandgefahr besteht, und zwar aufgrund der Rußschichten, welche leitfähige Verbindungen zwischen den vorhandenen Potentialen ermöglichen.

Aus dem Vorstehenden ist es daher Aufgabe der Erfindung, eine weiterentwickelte Anordnung zur sicheren Netztrennung von Überspannungsableitern, insbesondere Varistoren, bei Vorliegen von temporären Überspannungen (TOV) durch Auslösen einer mit dem Überspannungsableiter in Reihe liegenden Sicherung anzugeben, welche außerordentlich schnell reagiert, so dass der maximal mögliche Kurzschlussstrom fließen kann, um die vorerwähnte Sicherung zum Auslösen zu bringen.

Die Lösung der Aufgabe der Erfindung erfolgt durch die Merkmalskombination nach Anspruch 1, wobei die Unteransprüche mindestens eine zweckmäßige Ausgestaltung darstellen.

Die Anordnung zur sicheren Netztrennung von Überspannungsableitern, insbesondere Varistoren, bei Vorliegen von temporären Überspannungen durch Auslösen einer mit dem Überspannungsableiter in Reihe liegenden Sicherung weist erfindungsgemäß Überspannungsableiter auf, die mit einer Überschlagsstrecke versehen sind oder mit einer solchen separaten Überschlagsstrecke elektrisch verbunden werden. Der Überspannungsableiter ist darüber hinaus mit einer Kapselung oder einer Einhausung versehen, wobei die Kapselung oder Einhausung eine zur jeweiligen Überschlagsstrecke hin gerichtete Öffnung und/oder einen Kanal aufweist derart, dass ein bei thermischer Belastung bis hin zum Abbrand des Überspannungsableiters entstehender Gasstrom zur Überschlagsstrecke gelangt mit der Folge einer Reduzierung der Ansprechspannung der Überschlagsstrecke sowie eines Stromflusses mit Auslösen der in Reihe liegenden Sicherung.
Dabei ist die Kapselung oder Einhausung so ausgeführt, dass ein Weiterbrennen oder eine Beschädigung des Überspannungsableiters über das nicht zu vermeidende Maß hinaus begrenzt wird.
Die Kapselung oder Einhausung besteht aus einem mindestens zeitweise temperaturbeständigen sowie einem brandsicheren Material.

Der Überspannungsableiter nach Anspruch 1 verfügt über elektrische Anschlüsse, die mit Leiterbahnen eines Verdrahtungsträgers in Verbindung stehen, wobei die Abschnitte der Leiterbahnen als Überschlagsstrecke ausgebildet sind. Es kann also bei einer kupferkaschierten Leiterplatte die Leitungsführung so weitergebildet werden, dass gegenüberliegende Flächen der entsprechenden Leiterbahnstruktur die Überschlagsstrecke definieren, und zwar in einer entsprechenden reproduzierbaren Weise.
Diesbezüglich sind die Leiterbahnabschnitte als Anschlusspads ausgebildet und weisen einen wenige Millimeter großen Abstand zur Bildung der Überschlagsstrecke auf.
Die Überschlagsstrecke ist aber auch durch eine Metallisierung unmittelbar an einer vordefinierten Stelle des Überspannungsableiters realisierbar.
Der Abstand der die Überschlagsstrecke bildenden Flächen ist über um ein Vielfaches größer als der Elektrodenabstand von Luftdurchschlags-Funkenstrecken. Damit ist sichergestellt, dass es im Normalbetrieb zu keinem Überschlag zwischen den Varistorpotentialen kommt.
Erst beim Abbrand des Varistors bzw. beim Entstehen entsprechender leitfähiger Gase senken die dabei entstehenden Gase die Ansprechspannung im Bereich der Anschlusspads ab und es kommt zu einem Überschlag. Hierdurch wird der defekte Überspannungsableiter überbrückt und der Strom fließt nahezu unbeeinflusst durch die Sicherung, um diese auszulösen und die gewünschte Netztrennung zu bewirken.

Die vorgeschlagene Einhausung oder Kapselung kann bei einer Ausgestaltung der Erfindung ein Teil der Gehäusegestaltung eines Überspannungsschutzgeräts sein.

Die Einhausung kann als ein mehrteiliges, kofferartiges Gebilde ausgeführt werden.

Bevorzugt wird die Überschlagsstrecke von zwei oder mehreren metallischen Flächen gebildet, deren engster Abstand die Ansprechspannung bestimmt.

Das Auslösen der Sicherung kann vorzugsweise über eine Fernmeldeeinrichtung und/oder eine optische Anzeige signalisiert werden, um den Fehlerzustand sicher zu erkennen.

Die Erfindung soll nachstehend anhand von Ausführungsbeispielen sowie unter Zuhilfenahme von Figuren näher erläutert werden.

Hierbei zeigen:
- Fig. 1: eine schematische Blockschaltbilddarstellung einer Reihenschaltung eines Varistors, eines Gasentladungsableiters sowie einer Sicherung nebst Übertrager bzw. Primärspule einer Triggerschaltung mit den erfindungsgemäßen Überschlagpads und einer angedeuteten Kapselung;
- Fig. 2: eine perspektivische Detaildarstellung einer Anordnung eines in einer Kapselung befindlichen Varistors mit Überschlagsstrecke und in Reihe geschalteter Sicherung, wobei die elektrischen Elemente auf einem Verdrahtungsträger befindlich sind;
- Fig. 3: eine perspektivische Detailansicht eines Überspannungsschutzgeräts mit integrierter Überschlagsstrecke, Varistor und Einhausung, wobei der eingesetzte Varistor eine Knopfform besitzt, und
- Fig. 4: eine perspektivische Darstellung eines weiteren Ausführungsbeispiels eines Überspannungsschutzgeräts mit rechteckigem Varistor auf einer Triggerschaltung, entsprechender Überschlagsstrecke und Einhausung, die noch nicht über den Varistor aufgeschoben ist.

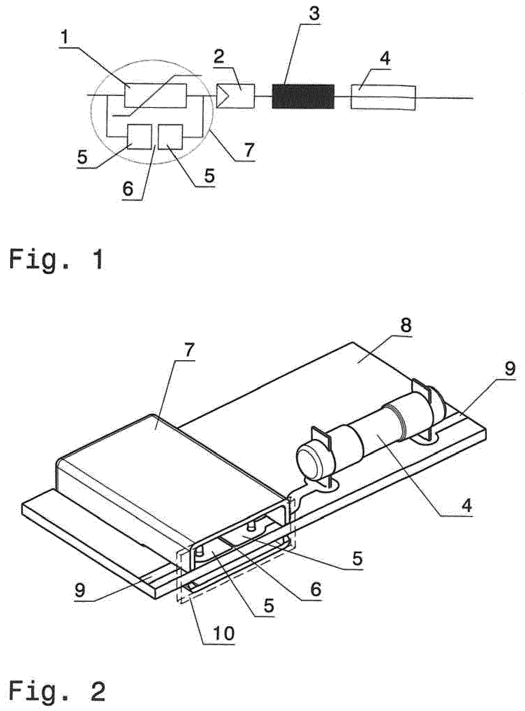

Aus der Darstellung nach Fig. 1 ist das für die erfindungsgemäße Lösung relevante elektrische Schaltbild nachvollziehbar.
Ein Überspannungsableiter in Form eines Varistors 1 liegt mit einem Gasentladungsableiter 2, der Primärspule eines Übertragers 3 und einer Sicherung 4 in Reihe. Die Anschlüsse des Varistors stehen mit Überschlagpads 5 in Verbindung.

Zwischen den Überschlagpads 5 ist eine Überschlagsstrecke 6 ausgebildet.

Die Überschlagpads 5 stehen elektrisch mit entsprechenden Anschlusskontakten des Varistors 1 in Verbindung. Eine Einhausung bzw. Kapselung 7 ist ebenfalls symbolisch dargestellt.

Durch die Kapselung 7 des Varistors werden im Überlastungsfall entstehende Abbrandgase hin in Richtung der Überschlagpads kanalisiert, wobei eine entsprechende Öffnung bzw. eine kanalförmige Ausführung der Einhausung vorgesehen ist.

Die Überschlagsstrecke 6 wird durch die leitfähigen Gase überbrückt, so dass sich ein Lichtbogen ausbildet.

Die Sicherung 4 löst dann innerhalb von ein bis zwei Halbwellen aus. Das entsprechend ausgerüstete Überspannungsschutzgerät wird dann weder durch den Abbrand des Varistors noch durch den frei brennenden Lichtbogen nach außen sichtbar zerstört. Das Auslösen der internen Sicherung 4 wird über einen in der Fig. 1 nicht dargestellten Anzeigeschieber oder eine Fernmeldeeinrichtung nach außen sichtbar gemacht bzw. signalisiert.

Die Fig. 2 zeigt in perspektivischer Ansicht einen Verdrahtungsträger 8, der kupferkaschierte Leiterbahnen 9 aufweist.

Die Sicherung 4, ist elektrisch mit den Leiterbahnen 9 kontaktiert.

Auf dem Verdrahtungsträger 8 befindet sich darüber hinaus ein von einer Kapselung 7 umhauster Varistor.

Die Anschlüsse des Varistors führen ebenfalls zu der entsprechenden Leiterbahn 9 und dort vorhandenen Überschlagpads 5. Eine deckelartige Blende 10 stellt sicher, dass im Störungsfall entstehende Gase sich auf den Bereich der Überschlagpads 5 konzentrieren und die Umgebung nicht gefährden.

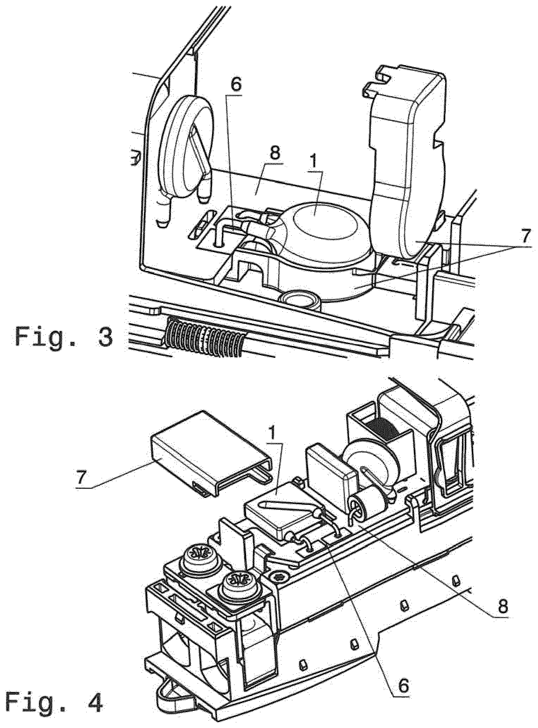

Anhand der Fig. 3 und 4 wird eine praktische Ausführungsform der Kapselung gezeigt, wobei der Varistor 1 nach Fig. 3 eine knopfförmige Gestalt besitzt und die Einhausung 7 kofferartig entsprechend der Kontur des Varistors 1 realisiert wurde. Über ein Scharniergelenk, insbesondere ein Filmscharnier, sind die beiden Hälften des kofferartigen Gehäuses 7 in einen Schließzustand überführbar.

Auch bei diesem Ausführungsbeispiel wird die Überschlagsstrecke durch entsprechende Pads 5 in Form diesbezüglicher Abschnitte einer Leiterbahn realisiert.

Bei der Ausführungsform eines Überspannungsschutzgeräts nach Fig. 4 findet ein quaderförmiger Varistor 1 Anwendung. Diesbezüglich entsprechend ist die Kapselung 7 quaderförmig und kann über den Varistor 1 geschoben werden. Der anschlussseitige Bereich des Varistors 1 bleibt dabei frei, so dass entstehende Gase bei Zerstörung des Varistors 1 zur Überschlagsstrecke 6 gelangen.

## Patentansprüche

1. Anordnung, umfassend einen Überspannungsableiter (1), insbesondere Varistor, aufweisend eine Überschlagsstrecke (6) oder elektrisch verbunden mit einer separaten Überschlagsstrecke (6), wobei besagter Überspannungsableiter in Reihe zu einer Sicherung (4) liegt und mit einer Kapselung (7) oder Einhausung versehen ist, wobei besagte Anordnung zur sicheren Netztrennung besagten Überspannungsableiters bei Vorliegen von temporären Überspannungen (TOV) durch Auslösen besagter Sicherung geeignet ist
**dadurch gekennzeichnet, dass**
die Kapselung (7) oder Einhausung eine zur jeweiligen Überschlagsstrecke hin gerichtete Öffnung und/oder einen Kanal aufweist derart, dass ein bei thermischer Belastung bis hin zum Abbrand des Überspannungsableiters (1) entstehender Gasstrom zur Überschlagsstrecke gelangt mit der Folge einer Reduzierung der Ansprechspannung der Überschlagsstrecke sowie eines Stromflusses mit Auslösen der in Reihe liegenden Sicherung, wobei hierfür der Überspannungsableiter (1) über elektrische Anschlüsse verfügt, die mit Leiterbahnen (9) eines Verdrahtungsträgers (8) in Verbindung stehen, wobei Abschnitte der Leiterbahnen (9) als Elemente (5) ausgebildet sind, deren Abstand die Überschlagsstrecke (6) bildet.

2. Anordnung nach Anspruch 1,
**dadurch gekennzeichnet, dass**
die Kapselung (7) oder die Einhausung aus einem mindestens zeitweise temperaturbeständigen und brandsicheren Material besteht.

3. Anordnung nach Anspruch 1,
**dadurch gekennzeichnet, dass**
die Leiterbahnabschnitte (5) als Anschlusspads ausgebildet sind und einen wenige Millimeter großen Abstand zur Bildung der Überschlagsstrecke (6) aufweisen.

4. Anordnung nach einem der vorangegangenen Ansprüche,
**dadurch gekennzeichnet, dass**
die Einhausung (7) Teil der Gehäusegestaltung eines Überspannungsschutzgeräts ist.

5. Anordnung nach einem der Ansprüche 1 bis 3,
**dadurch gekennzeichnet, dass**
die Einhausung (7) als ein mehrteiliges kofferartiges Gebilde ausgeführt ist.

6. Anordnung nach einem der Ansprüche 1 bis 3,
**dadurch gekennzeichnet, dass**
die Einhausung (7) als aufschieb- oder aufsetzbare Kappe ausgebildet ist.

7. Anordnung nach einem der vorangegangenen Ansprüche,
**dadurch gekennzeichnet, dass**
die Überschlagsstrecke (6) von zwei oder mehreren metallischen Flächen gebildet wird, deren engster Abstand die Ansprechspannung bestimmt.

8. Anordnung nach einem der vorangegangenen Ansprüche,
**dadurch gekennzeichnet, dass**
das Auslösen der Sicherung (4) über eine Fernmeldeeinrichtung und/oder eine optische Anzeige signalisiert wird.

## Claims

1. An arrangement, comprising a surge arrester (1), in particular a varistor, having a flashover gap (6) or electrically connected to a separate flashover gap (6), wherein said surge arrester is connected in series to a fuse (4) and is provided with an encapsulation (7) or housing, wherein said arrangement is appropriate for secure supply isolation of said surge arrester by triggering said fuse in the presence of temporary overvoltages (TOV),
**characterized in that**
the encapsulation (7) or housing has an opening and/or a channel directed toward the respective flashover gap such that a gas flow, generated in case of thermal load up to the melting loss of the surge arrester (1), reaches the flashover gap with the consequence of a reduction of the response voltage of the flashover gap and a current flow with triggering the fuse connected in series, wherein the surge arrester (1) has electrical terminals for this purpose, which are in communication with conductor tracks (9) of a wiring carrier (8), wherein sections of the conductor tracks (9) are formed as elements (5), the distance of which forms the flashover gap (6).

2. The arrangement according to claim 1,
**characterized in that**
the encapsulation (7) or housing is made of an at least temporarily temperature-resistant and fire-proof material.

3. The arrangement according to claim 1,
**characterized in that**
the conductor track portions (5) are formed as terminal pads and have a distance of a few millimeters for forming the flashover gap (6).

4. The arrangement according to any one of the preceding claims,
**characterized in that**
the housing (7) is part of a housing design of an overvoltage protection device.

5. The arrangement according to any one of claims 1 to 3,
**characterized in that**
the housing (7) is realized as a multi-part suitcase-like structure.

6. The arrangement according to any one of claims 1 to 3,
**characterized in that**
the housing (7) is realized as a cap that can be slid on or placed on.

7. The arrangement according to any one of the preceding claims,
**characterized in that**
the flashover gap (6) is formed by two or more metallic surfaces, the narrowest distance of which determines the response voltage.

8. The arrangement according to any one of the preceding claims,
**characterized in that**
the triggering of the fuse (4) is signalized via a telecommunication device and/or an optical display.

## Revendications

1. Ensemble comprenant un dérivateur de surtension (1), en particulier une varistance, présentant un trajet pour les décharges disruptives (6) ou étant électriquement connecté à un trajet séparé pour les décharges disruptives (6), ledit dérivateur de surtension étant connecté en série avec un fusible (4) et étant muni d'un encapsulage (7) ou d'une enceinte, ledit ensemble étant approprié pour une déconnexion sûre dudit dérivateur de surtension du réseau en présence de surtensions temporaires (TOV) par déclenchement dudit fusible,
**caractérisé en ce que**
l'encapsulage (7) ou l'enceinte présente une ouverture dirigée vers le trajet respectif pour les décharges disruptives et/ou un canal, de telle sorte qu'un flux de gaz se produisant sous charge thermique jusqu'à la combustion du dérivateur de surtension (1) atteint le trajet pour les décharges disruptives avec pour conséquence une réduction de la tension de réponse du trajet pour les décharges disruptives et un flux de courant avec déclenchement du fusible monté en série, le dérivateur de surtension (1) présentant à cet effet des bornes électriques qui sont reliées à des pistes conductrices (9) d'un support de câblage (8), des portions des pistes conductrices (9) étant conçues sous forme d'éléments (5) dont l'espacement forme le trajet pour les décharges disruptives (6).

2. Ensemble selon la revendication 1,
**caractérisé en ce que**
l'encapsulage (7) ou l'enceinte est constitué(e) d'un matériau qui résiste au moins temporairement à la température et au feu.

3. Ensemble selon la revendication 1,
**caractérisé en ce que**
les portions (5) de la piste conductrice sont conçues comme des plots de connexion et ont une distance de quelques millimètres pour former le trajet pour les décharges disruptives (6).

4. Ensemble selon l'une des revendications précédentes,
**caractérisé en ce que**
l'enceinte (7) fait partie de la conception du boîtier d'un dispositif de protection contre les surtensions.

5. Ensemble selon l'une des revendications 1 à 3,
**caractérisé en ce que**
l'enceinte (7) est conçue comme une structure en plusieurs parties ressemblant à un coffre.

6. Ensemble selon l'une des revendications 1 à 3,
**caractérisé en ce que**
l'enceinte (7) est conçue sous la forme d'un capuchon à emboîter ou à rapporter.

7. Ensemble selon l'une des revendications précédentes,
**caractérisé en ce que**
le trajet pour les décharges disruptives (6) est formé par deux ou plusieurs surfaces métalliques, dont la distance la plus étroite détermine la tension de réponse.

8. Ensemble selon l'une des revendications précédentes,
**caractérisé en ce que**
le déclenchement du fusible (4) est signalé par un appareil de télécommunication et/ou par un affichage optique.
